# EUROPEAN PATENT APPLICATION

(11) **EP 4 772 829 A1**
(43) Date of publication of application: **08.07.2026**
(21) Application number: 24905532.8
(22) Date of filing: 30.07.2024
(51) Int. Cl.: G01B 11/02, G01B 11/14, G06T 7/80, H01M 10/04, H01M 50/204

(54) **DISTANCE MEASURING APPARATUS AND METHOD, AND BATTERY ASSEMBLING DEVICE AND METHOD**

(30) Priority: 22.12.2023 CN 202311777999
(71) Applicant: Contemporary Amperex Technology Co., Limited, Ningde, Fujian 352100 (CN)
(72) Inventor: HU, Liangjin, Ningde, Fujian 352100 (CN); MA, Lin, Ningde, Fujian 352100 (CN)
(74) Representative: Ziebig Hengelhaupt Intellectual Property Attorneys Patentanwaltskanzlei PartGmbB
(86) International application number: PCT/CN2024/108381
(87) International publication number: WO 2025/130036

(57) **Abstract**

Embodiments of the present application provide a distance measurement apparatus and method, and battery assembly equipment and method. The distance measurement apparatus includes an image capture device, a processor, and a calibration assembly, where the image capture device is configured to capture an image of a gap occurring during assembly of a battery, the processor is configured to process the image to obtain a width dimension of the gap along a first direction, and the calibration assembly is configured to cooperate with the processor to correct an image capture parameter of the image capture device, and configured to cause a difference between a measured value of the gap and an actual value of the gap to be less than a preset value, where the measured value of the gap is the width dimension of the gap along the first direction obtained after an image captured by the corrected image capture device is processed by the processor. The battery assembly equipment includes the distance measurement apparatus.

## Description

### TECHNICAL FIELD

The present application relates to the field of battery assembly technology, and in particular, to a distance measurement apparatus and method, and battery assembly equipment and method.

### BACKGROUND

With energy saving and emission reduction being the key to the sustainable development of the automobile industry, electric vehicles have become an important part of the sustainable development of automotive industry due to their advantages of energy saving and environmental protection. For electric vehicles, the battery technology is an important factor related to their development.

During the battery assembly process, assembly gaps may occur between some components. Precise measurement of the dimensions of the assembly gaps is beneficial for improving the safety of subsequent welding connection.

The above statements are only used to provide background information related to the present application and do not necessarily constitute the prior art.

### SUMMARY OF THE INVENTION

The present application provides a distance measurement apparatus and method, and battery assembly equipment and method, which can effectively improve the accuracy of gap measurement.

In a first aspect, the present application provides a distance measurement apparatus, including an image capture device, a processor, and a calibration assembly, where the image capture device is configured to capture an image of a gap occurring during assembly of a battery, the processor is configured to process the image to obtain a width dimension of the gap along a first direction, and the calibration assembly is configured to cooperate with the processor to correct an image capture parameter of the image capture device, and configured to cause a difference between a measured value of the gap and an actual value of the gap to be less than a preset value, where the measured value of the gap is the width dimension of the gap along the first direction obtained after an image captured by the corrected image capture device is processed by the processor.

By correcting the image capture parameter of the image capture device through the calibration assembly before measurement, the gap dimension measured after the image captured by the adjusted image capture device is processed by the processor can be made as consistent as possible with the true gap value, thereby effectively improving the measurement accuracy of the measurement apparatus, providing data support for the subsequent welding process, avoiding issues such as laser leakage during welding, and improving the reliability and safety of the subsequent welding process. Through correction, it is possible to effectively avoid the inability to acquire the true gap dimension from the captured image due to unreasonable settings of the image capture parameter of the image capture device, while overcoming the influence of product burrs on the measured value of the gap dimension.

In some embodiments, the calibration assembly includes a calibration piece and a clamp, where the calibration piece is disposed in the gap, and the clamp is configured to clamp the battery to prevent the calibration piece from falling out of the gap.

By clamping the battery with the clamp and keeping the calibration piece from falling out of the gap, at this point, the image capture device is used to capture an image of the gap filled with the calibration piece; after this image is processed by the processor, the width dimension of the gap along the first direction can be obtained; and based on the difference between the obtained width dimension of the gap along the first direction and the thickness dimension of the calibration piece along the first direction being less than a preset value, the image capture parameter of the image capture device is adjusted to cause the gap dimension obtained after the image of the gap captured again by the adjusted image capture device is processed to have a difference from the true gap dimension that is less than the preset value, thus greatly improving the measurement accuracy of the measurement apparatus.

In some embodiments, the calibration assembly further includes a calibration unit, the calibration unit being configured to adjust the image capture parameter of the image capture device to cause a difference between the measured value of the gap and a thickness dimension of the calibration piece along the first direction to be less than the preset value, where the measured value of the gap is the width dimension of the gap along the first direction obtained after an image of the gap provided with the calibration piece captured by the image capture device is processed by the processor.

By providing the calibration unit, it can replace manual operation to complete the adjustment of the image capture parameter of the image capture device, which is beneficial for improving the operational efficiency and reducing labor costs.

In some embodiments, the calibration assembly includes two calibration pieces having an identical thickness, the two calibration pieces being disposed in the gap in a spaced-apart manner along a second direction perpendicular to the first direction, where during calibration, the image capture device is configured to capture an image of the gap located between the two calibration pieces.

By providing the two calibration pieces and enabling the two calibration pieces to have a certain spacing in the second direction, a gap having a relatively stable dimension can be formed between the two calibration pieces in the second direction, such that during calibration, the image capture device captures an image of the gap located between the two calibration pieces, which can cause the measurement result to be more accurate, thereby making the calibration result more accurate.

In some embodiments, the distance between the two calibration pieces is 2 mm to 8 mm.

Setting the distance between the two calibration pieces to 2 mm to 8 mm facilitates forming a gap having a uniform dimension in the second direction, which neither affects the uniformity of the gap due to an excessively long distance nor affects capturing the image of the gap due to an excessively short distance.

In some embodiments, the calibration assembly includes a spacer, the spacer being disposed between the clamp and the battery.

By providing the spacer, it is possible to prevent an excessive clamping force of the clamp from causing damage to a clamping position of the battery, which is beneficial for protecting the battery.

In some embodiments, the clamp includes two clamping members and connection members connected between the two clamping members.

By providing the two clamping members, the two clamping members can respectively clamp two sides of the battery, thereby clamping the battery between the two clamping members. By providing two connection members, the two clamping members can be maintained at positions having a preset distance.

In some embodiments, the distance between the two clamping members is adjustable. The benefit of such a configuration is that, the distance between the two clamping members can be adjusted in real time according to the dimensions of the battery, thereby improving the adaptability of the clamp to batteries of different sizes.

In some embodiments, the connection members each include a bolt and nuts. The bolt passes through installation holes provided in the two clamping members, and the nuts are connected to the outer sides of the clamping members, and can fix the positions of the clamping members, thereby adjusting the distance between the two clamping members by adjusting the positions of the nuts on the bolt.

In some embodiments, the clamp further includes a blocking member, the blocking member being disposed between the two clamping members, the blocking member being mounted on the connection members and the blocking member being movable along the connection members to adjust the distance between the blocking member and the clamping members.

By providing the blocking member, it is possible to adapt to batteries of different dimensions by means of adjusting the positions of the blocking member on the connection members. The battery is disposed between the blocking member and one of the clamping members, and the clamp effect is achieved by the blocking member and the clamping member.

In a second aspect, the present application provides battery assembly equipment, including the aforementioned distance measurement apparatus.

In a third aspect, the present application provides a distance measurement method, including:
correcting an image capture parameter of an image capture device;
capturing, using the image capture device, an image of a gap occurring during assembly of a battery; and
processing the image to obtain a width dimension of the gap along a first direction;
where a difference between a measured value of the gap and an actual value of the gap is less than a preset value, where the measured value of the gap is the width dimension of the gap along the first direction obtained after an image captured by the corrected image capture device is processed.

Before using the image capture device to capture an image of the gap and processing the image to obtain the dimensions of the gap, correcting the image capture parameter of the image capture device can cause the measured gap dimension to be as close as possible to the true gap dimension, thereby improving the accuracy of gap measurement.

In some embodiments, the operation of correcting the image capture parameter of the image capture device includes:
inserting a calibration piece into the gap;
clamping the battery to prevent the calibration piece from falling out of the gap; and
capturing, using the image capture device, an image of the gap provided with the calibration piece, and adjusting the image capture parameter of the image capture device to cause a difference between the measured value of the gap and a thickness dimension of the calibration piece along the first direction to be less than the preset value, where the measured value of the gap is the width dimension of the gap along the first direction obtained after the image of the gap provided with the calibration piece captured by the image capture device is processed.

In this embodiment, based on the gap dimension obtained after processing being equal to the thickness dimension of the calibration piece, the image capture parameter of the image capture device is adjusted, such that the image captured by the image capture device can be processed to obtain an accurate gap dimension, thereby avoiding the inability to obtain the true gap dimension from the captured image due to unreasonable settings of the image capture parameter, while overcoming the influence of product burrs on the measured value of the gap dimension.

In some embodiments, the operation of correcting the image capture parameter of the image capture device includes:
inserting two calibration pieces of identical thickness into the gap, with the two calibration pieces spaced apart by a preset distance along a second direction perpendicular to the first direction;
clamping the battery to prevent the calibration piece from falling out of the gap; and
capturing, using the image capture device, an image of the gap located between the two calibration pieces, and adjusting the image capture parameter of the image capture device to cause a difference between the measured value of the gap and a thickness dimension of the calibration piece along the first direction to be less than the preset value, where the measured value of the gap is the width dimension of the gap along the first direction obtained after the image of the gap provided with the calibration piece captured by the image capture device is processed.

In this embodiment, the dimension of the gap located between the two calibration pieces is relatively uniform, such that capturing an image here and performing correction based on the gap dimension obtained by processing this image is conducive to improving the correction effect, making the measured value closer to the true value.

In some embodiments, the operation of correcting the image capture parameter of the image capture device further includes: performing replacement with a plurality of calibration pieces having different thicknesses, and performing a plurality of corrections on the image capture parameter of the image capture device.

By performing replacement with a plurality of calibration pieces having different thicknesses, and performing a plurality of corrections on the image capture parameter of the image capture device, the correction effect can be improved, making the measured value closer to the true value.

In some embodiments, the image capture parameter of the image capture device includes at least one of exposure, sensitivity, or focal length.

Exposure, sensitivity, focal length, and the like all affect the quality of the image, thereby affecting the processing result of the image, and thus affecting the measured value of the gap dimension. Correcting parameters such as the exposure, sensitivity, and focal length is conducive to improving the image capture effect, thereby improving the accuracy of measurement.

In a fourth aspect, the present application provides a battery assembly method, including the aforementioned distance measurement method.

The foregoing description is merely an overview of the technical solutions of the present application. In order that technical means of the present application can be understood more clearly so that the technical means can be implemented according to content of the specification, and in order that the foregoing and other objectives, features, and advantages of the present application can be understood more clearly, specific implementations of the present application are described below.

### DESCRIPTION OF DRAWINGS

In order to explain technical solutions of the examples of the present application more clearly, a brief introduction of drawings to be used in the examples of the present application will be made below. Apparently, the drawings described below are merely some examples of the present application, and other drawings can be obtained according to these drawings by those ordinarily skilled in the art without creative efforts.
FIG. 1 is a schematic diagram of image capture by an image capture device in some embodiments of the distance measurement apparatus disclosed in the present application.
FIG. 2 is a schematic structural diagram of a calibration assembly in some embodiments of the distance measurement apparatus disclosed in the present application.
FIG. 3 is a schematic structural diagram of a calibration assembly in some other embodiments of the distance measurement apparatus disclosed in the present application.

In the accompanying drawings, the accompanying drawings are not drawn to actual scale.

Description of reference numerals:
1: image capture device; 2: processor; 3: calibration assembly; 31: calibration piece; 32: clamp; 321: clamping member; 322: connection member; 3221: bolt; 3222: nut; 323: spacer; 324: blocking member; 33: calibration unit; 4: battery; 41: case; 42: cover.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meaning as commonly understood by those skilled in the art belonging to the technical field of the present application. The terms used herein are intended only for the purpose of describing specific embodiments and are not intended to limit the present application. The terms "including" and "having" and any variations thereof in the specification and the claims of the present application and in the description of drawings above are intended to cover non-exclusive inclusion.

In the description of the embodiments of the present application, the technical terms "first," "second," and the like are used only for distinguishing between different objects, and are not to be understood as indicating or implying a relative importance or implicitly specifying the number, particular order, or primary and secondary relation of the technical features indicated. Furthermore, the term "vertical" is not vertical in the strict sense, but is within the margin of error allowed. "Parallel" is not parallel in the strict sense, but within the margin of error allowed.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated object, indicating that there can be three kinds of relationships, such as A and/or B, which can be denoted as: the existence of A alone, the existence of A and B at the same time, and the existence of B alone. In addition, the character "/" herein generally means that the associated objects before and after it are in an "or" relationship.

In the description of the embodiments of the present application, the meaning of "a plurality of" is two or more, unless otherwise explicitly and specifically defined. Similarly, "a plurality of groups" refers to two or more groups, and "a plurality of sheets" refers to two or more sheets, unless otherwise explicitly and specifically defined.

In the description of the embodiments of the present application, the orientation or position relationship indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," and the like are based on the orientation or position relationship shown in the drawings and are intended to facilitate the description of the embodiments of the present application and simplify the description only, rather than indicating or implying that the apparatus or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," and the like should be understood in a broad sense, such as a fixed connection, a detachable connection, an integral connection; a mechanical connection, an electrical connection; a direct connection, an indirect connection through an intermediate medium, an internal connection of two elements, or an interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, their market demand is also constantly increasing.

To meet the continuously increasing demand for power batteries, the manufacturing efficiency of batteries needs to be continuously improved, and the assembly efficiency of batteries also needs to be continuously improved.

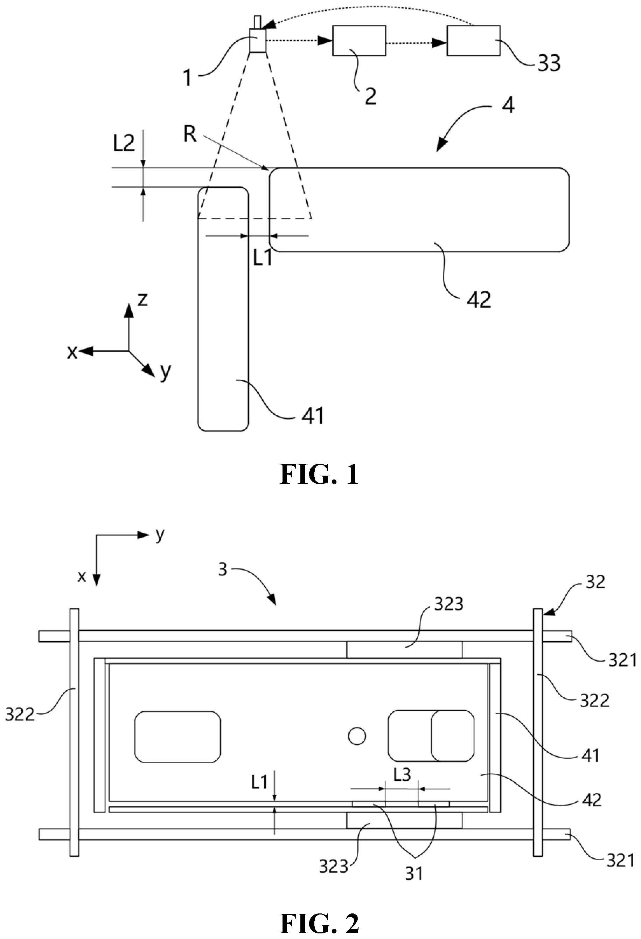

In the assembly process of a battery, for example, the assembly of a prismatic battery, as shown in FIG. 1, the battery 4 includes a case 41 and a cover 42. After the cover 42 is installed onto the top of the case 41, a certain gap L1 still exists between the case 41 and the cover 42. If this gap L1 is too large, it may cause the problem of laser leakage during the subsequent process of connecting the case 41 and the cover 42 by means of laser tack welding or full welding. After the laser leaks, it directly enters the interior of the battery and burns the bare battery cells, causing the bare battery cells to fail, resulting in waste of materials, which is not conducive to cost control. Therefore, before welding and connecting the case 41 and the cover 42, it is necessary to measure the dimensions of the gap L1 between the case 41 and the cover 42 to provide data support for the subsequent welding process, thereby improving the reliability and safety of welding connection.

In the related art, a method of inserting feeler gauges of different thicknesses into the gap L1 is used to measure the dimensions of the gap L1. The specific procedure is as follows: the measurement personnel insert feeler gauges of different thicknesses into the gap L1, and rely on tactile feedback to judge the tightness of the feeler gauge in the gap after it is inserted, confirming the thickness of which feeler gauge equals the dimension of the gap L1. The thickness of the feeler gauge is the measured value of the gap L1 between the case 41 and the cover 42.

However, judging the tightness of the feeler gauge in the gap after it is inserted based on the measurement personnel's tactile feedback suffers from relatively large errors, and different measurement personnel may have different standards for judging tightness. Therefore, the measurement accuracy needs improvement.

To address this, in the related art, a method using camera image capture to identify the gap dimension is used to replace manual measurement. Although this method can replace manual operations and greatly improve the measurement efficiency, as shown in FIG. 1, there is a certain height difference L2 in the height direction between the case 41 and the cover 42. The case 41 and the cover 42 are not in the same plane, presenting a potential depth of field problem, which affects the edge capture accuracy during image capture. The measurable gap position in images captured under different exposures may also vary. Furthermore, the edge of the cover 42 has a rounded corner R, which can lead to significant errors when using a camera to capture images from top down.

Moreover, it is crucial to note that both the case 41 and the cover 42 are substantially processed through methods such as casting. Consequently, the edges of the case 41 and the cover 42 have burrs, which further leads to relatively large errors when employing the method of identifying gap dimensions through image capture, thereby compromising the measurement accuracy.

Aiming at the problem of poor measurement accuracy of the method for identifying gap dimensions through camera image capture, the present application provides an improved distance measurement apparatus. This apparatus is provided with a calibration assembly, which can calibrate the image capture parameter of the image capture device before measurement, such that the gap dimension measured by the adjusted image capture device remains as consistent as possible with the true gap value, thereby ensuring the accuracy of subsequent measurements.

Referring to FIG. 1 and FIG. 2, in some embodiments of the distance measurement apparatus provided in the present application, the apparatus includes an image capture device 1, a processor 2, and a calibration assembly 3, where the image capture device 1 is configured to capture an image of a gap occurring during assembly of a battery 4, the processor 2 is configured to process the image to obtain a width dimension of the gap along a first direction x, and the calibration assembly 3 is configured to cooperate with the processor 2 to correct an image capture parameter of the image capture device 1, and configured to cause a difference between a measured value of the gap and an actual value of the gap to be less than a preset value, where the measured value of the gap is the width dimension of the gap along the first direction obtained after an image captured by the corrected image capture device 1 is processed by the processor 2.

Herein, the magnitude of the preset value may be determined according to an acceptable error range. When the standard requirement for measurement errors is high, the preset value may be set to a smaller value, such as 0.1, 0.01, or 0.001, etc., such that the measured value of the gap is substantially equal to the actual value of the gap; when the standard requirement for measurement errors is not very high, the preset value may be set to a slightly larger value, such as 0.15, 0.2, or 0.5, etc.

By correcting the image capture parameter of the image capture device 1 through the calibration assembly 3 before measurement, the gap dimension measured after the image captured by the adjusted image capture device 1 is processed by the processor 2 can be made as consistent as possible with the true gap value, thereby effectively improving the measurement accuracy of the measurement apparatus, providing data support for the subsequent welding process, avoiding issues such as laser leakage during welding, and improving the reliability and safety of the subsequent welding process. Through correction, it is possible to effectively avoid the inability to acquire the true gap dimension from the captured image due to unreasonable settings of the image capture parameter of the image capture device 1, while overcoming the influence of product burrs on the measured value of the gap dimension.

The processor 2 may be a general-purpose processor configured to execute the functions described in the present application, a programmable logic controller (PLC), a digital signal processor (DSP), an application specific integrated circuit (ASIC), a field-programmable gate array (FPGA), or other programmable logic devices, discrete gates or transistor logic devices, discrete hardware components, or any suitable combination thereof.

In some embodiments, the image capture device 1 includes an image sensor, such as a charged coupled device (CCD) camera or a complementary metal-oxide-semiconductor (CMOS) camera. The image sensor may utilize the photoelectric conversion function of photoelectric devices to convert an optical image on a photosensitive surface into electrical signals which are in a corresponding proportional relationship with the optical image, thereby enabling the processor 2 to obtain the gap dimension on the captured image based on these electrical signals.

In some embodiments, the calibration assembly 3 includes a calibration piece 31 and a clamp 32, where the calibration piece 31 is disposed in the gap, and the clamp 32 is configured to clamp the battery 4 to prevent the calibration piece 31 from falling out of the gap.

The clamping force of the clamp 32 when clamping the battery 4 is based on the criterion that the calibration piece 31 will not fall out of the gap.

By clamping the battery 4 with the clamp 32 and keeping the calibration piece 31 from falling out of the gap, at this point, the image capture device 1 is used to capture an image of the gap filled with the calibration piece 31; after this image is processed by the processor 2, the width dimension of the gap along the first direction can be obtained; and based on the difference between the obtained width dimension of the gap along the first direction and the thickness dimension of the calibration piece 31 along the first direction being less than a preset value, the image capture parameter of the image capture device 1 is adjusted to cause the gap dimension obtained after the image of the gap captured again by the adjusted image capture device 1 is processed to have a difference from the true gap dimension that is less than the preset value, thus greatly improving the measurement accuracy of the measurement apparatus.

In the aforementioned embodiments where the calibration assembly 3 includes the calibration piece 31 and the clamp 32, the adjustment process of the image capture parameter of the image capture device 1 can be completed manually by the image capture personnel.

In some embodiments, the calibration assembly 3 further includes a calibration unit 33, the calibration unit 33 being configured to adjust the image capture parameter of the image capture device 1 to cause a difference between the measured value of the gap and a thickness dimension of the calibration piece 31 along the first direction to be less than the preset value, where the measured value of the gap is the width dimension of the gap along the first direction obtained after an image of the gap provided with the calibration piece 31 captured by the image capture device 1 is processed by the processor 2.

In the aforementioned embodiments, by providing the calibration unit 33, it can replace manual operation to complete the adjustment of the image capture parameter of the image capture device 1, which is beneficial for improving the operational efficiency and reducing labor costs.

The calibration unit 33 is an apparatus for adjusting the image capture parameter of the image capture device 1. The image capture parameter includes at least one of exposure, sensitivity, or focal length. By adjusting the image capture parameter of the image capture device 1, the image capture state and the image capture accuracy of the image capture device 1 can be changed, such that the measured value of the gap obtained through the cooperative processing by the image capture device 1 and the processor 2 is substantially consistent with the thickness dimension of the calibration piece 31, in order to facilitate utilizing the adjusted image capture device 1 for image capturing in all subsequent distance measurements.

In some embodiments, the calibration unit 33 may be adjusted manually with human assistance, or may be adjusted fully automatically. A control program within the calibration unit 33 can automatically adjust the image capture parameter of the image capture device 1 based on a difference between the measured value of the gap and the thickness dimension of the calibration piece 31.

In some embodiments, the calibration assembly 3 includes two calibration pieces 31 having an identical thickness, the two calibration pieces 31 being disposed in the gap in a spaced-apart manner along a second direction y perpendicular to the first direction x, where during calibration, the image capture device 1 is configured to capture an image of the gap located between the two calibration pieces 31.

By providing the two calibration pieces 31 and enabling the two calibration pieces 31 to have a certain spacing in the second direction, a gap having a relatively stable dimension can be formed between the two calibration pieces 31 in the second direction, such that during calibration, the image capture device 1 captures an image of the gap located between the two calibration pieces 31, which can cause the measurement result to be more accurate, thereby making the calibration result more accurate.

In some embodiments, the calibration piece 31 may be a feeler gauge or another hard block having a known thickness.

In some embodiments, the distance between the two calibration pieces 31 is 2 mm to 8 mm, such as 2 mm, 3 mm, 4 mm, 5 mm, 6 mm, 7 mm, or 8 mm.

Setting the distance between the two calibration pieces 31 to 2 mm to 8 mm facilitates forming a gap having a uniform dimension in the second direction, which neither affects the uniformity of the gap due to an excessively long distance nor affects capturing the image of the gap due to an excessively short distance.

In some embodiments, the calibration assembly 3 includes a spacer 323, the spacer 323 being disposed between the clamp 32 and the battery 4.

By providing the spacer 323, it is possible to prevent an excessive clamping force of the clamp 32 from causing damage to a clamping position of the battery 4, which is beneficial for protecting the battery 4.

The spacer 323 may be a rubber cushion or a sponge cushion, or the like.

In some embodiments, the clamp 32 includes two clamping members 321 and connection members 322 connected between the two clamping members 321.

By providing the two clamping members 321, the two clamping members 321 can respectively clamp two sides of the battery 4, thereby clamping the battery 4 between the two clamping members 321. By providing two connection members 322, the two clamping members 321 can be maintained at positions having a preset distance.

In some embodiments, the distance between the two clamping members 321 is adjustable. The benefit of such a configuration is that, the distance between the two clamping members 321 can be adjusted in real time according to the dimensions of the battery 4, thereby improving the adaptability of the clamp 32 to batteries 4 of different sizes.

In some embodiments, the connection members 322 each include a bolt 3221 and nuts 3222. The bolt 3221 passes through installation holes provided in the two clamping members 321, the nuts 3222 are connected to the outer sides of the clamping members 321, and can fix the positions of the clamping members 321, thereby adjusting the distance between the two clamping members 321 by adjusting the positions of the nuts 3222 on the bolt 3221.

One end of the bolt 3221 is provided with a cap nut, so the connection members 322 may each include one nut 3222, where one clamping member 321 is positioned by the cap nut, and the other clamping member 321 is positioned by the nut 3222.

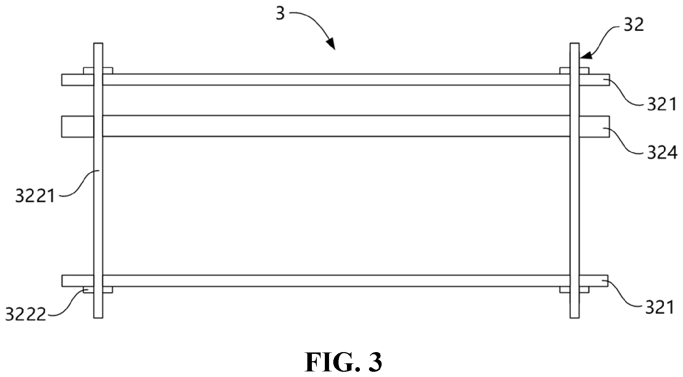

In another embodiment, as shown in FIG. 3, the connection members 322 each include a screw rod and two nuts, where the two nuts are respectively disposed on outer sides of the two clamping members 321, and the two clamping members 321 are positioned by the corresponding nuts, respectively.

In some embodiments, as shown in FIG. 3, the clamp 32 further includes a blocking member 324, the blocking member 324 being disposed between the two clamping members 321, the blocking member 324 being mounted on the connection members 322 and the blocking member 324 being movable along the connection members 322 to adjust the distance between the blocking member 324 and the clamping members 321.

By providing the blocking member 324, it is possible to adapt to batteries 4 of different dimensions by means of adjusting the positions of the blocking member 324 on the connection members 322. The battery 4 is disposed between the blocking member 324 and one of the clamping members 321, and the clamp effect is achieved by the blocking member 324 and the clamping member 321.

In embodiments where a movable blocking member 324 is provided, the two clamping members 321 can be configured to be fixed relative to the connection members 322.

Based on the distance measurement apparatus in the various aforementioned embodiments, the present application further provides battery assembly equipment, which tooling includes the aforementioned distance measurement apparatus.

The present application further provides a distance measurement method, including:
S001: correcting an image capture parameter of an image capture device 1;
S002: capturing, using the image capture device 1, an image of a gap occurring during assembly of a battery 4; and
S003: processing the image to obtain a width dimension of the gap along a first direction,
where a difference between a measured value of the gap and an actual value of the gap is less than a preset value, where the measured value of the gap is the width dimension of the gap along the first direction obtained after an image captured by the corrected image capture device 1 is processed.

Before using the image capture device 1 to capture an image of the gap and processing the image to obtain the dimensions of the gap, correcting the image capture parameter of the image capture device 1 can cause the measured gap dimension to be as close as possible to the true gap dimension, thereby improving the accuracy of gap measurement.

In some embodiments, the operation of step S001 includes:
S011: inserting a calibration piece 31 into the gap;
S012: clamping the battery 4 to prevent the calibration piece 31 from falling out of the gap; and
S013: capturing, using the image capture device 1, an image of the gap provided with the calibration piece 31, and adjusting the image capture parameter of the image capture device 1 to cause a difference between the measured value of the gap and a thickness dimension of the calibration piece 31 along the first direction to be less than the preset value, where the measured value of the gap is the width dimension of the gap along the first direction obtained after the image of the gap provided with the calibration piece 31 captured by the image capture device 1 is processed.

In this embodiment, based on the gap dimension obtained after processing being equal to the thickness dimension of the calibration piece 31, the image capture parameter of the image capture device 1 is adjusted, such that the image captured by the image capture device 1 can be processed to obtain an accurate gap dimension, thereby avoiding the inability to obtain the true gap dimension from the captured image due to unreasonable settings of the image capture parameter, while overcoming the influence of product burrs on the measured value of the gap dimension.

In some other embodiments, the operation of step S001 includes:
S011': inserting two calibration pieces 31 of identical thickness into the gap, with the two calibration pieces 31 spaced apart by a preset distance along a second direction perpendicular to the first direction;
S012': clamping the battery 4 to prevent the calibration piece 31 from falling out of the gap; and
S013': capturing, using the image capture device 1, an image of the gap located between the two calibration pieces 31, and adjusting the image capture parameter of the image capture device 1 to cause a difference between the measured value of the gap and a thickness dimension of the calibration piece 31 along the first direction to be less than the preset value, where the measured value of the gap is the width dimension of the gap along the first direction obtained after the image of the gap provided with the calibration piece 31 captured by the image capture device 1 is processed.

In this embodiment, the dimension of the gap located between the two calibration pieces 31 is relatively uniform, such that capturing an image here and performing correction based on the gap dimension obtained by processing this image is conducive to improving the correction effect, making the measured value closer to the true value.

In some embodiments, the operation of correcting the image capture parameter of the image capture device 1 further includes: performing replacement with a plurality of calibration pieces 31 having different thicknesses, and performing a plurality of corrections on the image capture parameter of the image capture device 1.

By performing replacement with a plurality of calibration pieces 31 having different thicknesses, and performing a plurality of corrections on the image capture parameter of the image capture device 1, the correction effect can be improved, making the measured value closer to the true value.

In some embodiments, the image capture parameter of the image capture device 1 includes at least one of exposure, sensitivity, or focal length.

Exposure, sensitivity, focal length, and the like all affect the quality of the image, thereby affecting the processing result of the image, and thus affecting the measured value of the gap dimension. Correcting parameters such as the exposure, sensitivity, and focal length is conducive to improving the image capture effect, thereby improving the accuracy of measurement.

The present application further provides a battery assembly method, including the aforementioned distance measurement method.

The distance measurement apparatus and method, and the battery assembly equipment and method provided in the present application are not only applicable to the measurement of the assembly gap between the case and the cover, but are also applicable to the measurement of gaps occurring between other components in battery assembly, such as between battery cells and the case, etc.

The structure and operational steps of one embodiment of the distance measurement apparatus of the present application will be described below with reference to FIGS. 1 to 3.

As shown in FIG. 1 and FIG. 2, the distance measurement apparatus includes an image capture device 1, a processor 2, and a calibration assembly 3. The battery 4 includes a case 41 and a cover 42. The edge of the cover 42 has a rounded corner R, and in the height direction, the case 41 and the cover 42 have a height difference L2. In the first direction x, the gap width between the case 41 and the cover 42 is L1. The image capture device 1 captures an image of the gap between the case 41 and the cover 42 from top down, and the processor 2 processes the image to obtain the width dimension of the gap between the case 41 and the cover 42 in the first direction x.

The calibration assembly 3 includes calibration pieces 31, a clamp 32, and a calibration unit 33. Two calibration pieces 31 are inserted into the gap between the case 41 and the cover 42, and in a second direction y perpendicular to the first direction x, the distance between the two calibration pieces 31 is L3. Here, in FIG. 1, any two directions among the x direction, the y direction, and the z direction are mutually perpendicular.

As shown in FIG. 2, the clamp 32 includes two clamping members 321, two connection members 322, and two spacers 323. The two clamping members 321 have a certain distance between them, the two connection members 322 are respectively connected to two ends of the two clamping members 321, the battery 4 is located between the two clamping members 321, and the two spacers 323 are respectively disposed on two sides of the battery 4 and located between the clamping members 321 and the case 41 of the battery 4.

As shown in FIG. 3, the connection members 322 each include a bolt 3221 and nuts 3222. By adjusting the positions of the nuts 3222, the distance between the two clamping members 321 can be adjusted, thereby adapting to batteries 4 of different sizes.

Meanwhile, in the embodiment shown in FIG. 3, the clamp 32 further includes a blocking member 324. The blocking member 324 is disposed between the two clamping members 321, and the battery 4 is disposed between the blocking member 324 and one of the clamping members 321. By adjusting the positions of the blocking member 324 on the connection members 322, the distance between the blocking member 324 and one of the clamping members 321 can be adjusted, thereby adapting to batteries 4 of different sizes.

The correction steps for the image capture parameter of the image capture device 1 include:
after the battery assembly is completed, at the gap between the case 41 and the cover 42, two calibration pieces 31 having an identical thickness are inserted, where the spacing between the two calibration pieces 31 in the second direction y is about 5 mm;
then, the clamp 32 is used to clamp both sides of the case 41 to simulate the clamping conditions and force applied to the battery during tack welding and full welding;
when the calibration pieces 31 are pressed and remain stable without falling out of the gap, the true width dimension of the gap located between the two calibration pieces 31 at this time is equal to the thickness dimension of the calibration piece 31;
then, the image capture device 1 is used to capture a photograph of the gap located between the two calibration pieces 31, while adjusting the image capture parameter (such as exposure, sensitivity, or focal length, etc.) of the image capture device 1, such that the gap dimension obtained after the photograph captured by the image capture device 1 is processed by the processor 2 is consistent with the thickness dimension of the calibration piece 31; and
then, calibration pieces 31 having different thicknesses are used separately to repeat the aforementioned operations, thereby ensuring that when calibration pieces 31 having different thicknesses are used, the gap dimensions obtained after the photographs captured by the image capture device 1 are processed by the processor 2 are all consistent with the thickness dimension of the calibration piece 31 that is being used;
At this time, it can be considered that the image capture parameter of the image capture device 1 has been adjusted to an optimal state. Using the image capture device 1 in this state for measurement on the production line can accurately measure the gap dimension occurring during the battery assembly process, thereby providing data support for subsequent welding connection, or the like, and mitigating safety accidents caused by laser leakage during welding.

The above description of the embodiments tends to emphasize the differences between the embodiments, and the same or similar aspects thereof can be referenced to each other. For the sake of simplicity, it will not be repeated here.

It should be understood by those skilled in the art that in the above methods of the specific embodiments, the writing order of various steps does not imply a strict performing order to constitute any limitation on the implementation process. The specific order of performing the various steps should be determined by its function and possible internal logic.

While the present application has been described with reference to the preferred examples, various modifications may be made and components thereof may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A distance measurement apparatus, comprising:
an image capture device (1) configured to capture an image of a gap occurring during assembly of a battery (4);
a processor (2) configured to process the image to obtain a width dimension of the gap along a first direction; and
a calibration assembly (3) configured to cooperate with the processor (2) to correct an image capture parameter of the image capture device (1), and configured to cause a difference between a measured value of the gap and an actual value of the gap to be less than a preset value, wherein the measured value of the gap is the width dimension of the gap along the first direction obtained after an image captured by the corrected image capture device (1) is processed by the processor (2).

2. The distance measurement apparatus according to claim 1, wherein the calibration assembly (3) comprises:
a calibration piece (31) disposed in the gap; and
a clamp (32) configured to clamp the battery (4) to prevent the calibration piece (31) from falling out of the gap.

3. The distance measurement apparatus according to claim 2, wherein the calibration assembly (3) further comprises a calibration unit (33), the calibration unit (33) being configured to adjust the image capture parameter of the image capture device (1) to cause a difference between the measured value of the gap and a thickness dimension of the calibration piece (31) along the first direction to be less than the preset value, wherein the measured value of the gap is the width dimension of the gap along the first direction obtained after an image of the gap provided with the calibration piece (31) captured by the image capture device (1) is processed by the processor (2).

4. The distance measurement apparatus according to claim 2 or 3, wherein the calibration assembly (3) comprises two calibration pieces (31) having an identical thickness, the two calibration pieces (31) being disposed in the gap in a spaced-apart manner along a second direction perpendicular to the first direction, wherein during calibration, the image capture device (1) is configured to capture an image of the gap located between the two calibration pieces (31).

5. The distance measurement apparatus according to claim 4, wherein the distance between the two calibration pieces (31) is 2 mm to 8 mm.

6. The distance measurement apparatus according to any one of claims 2 to 5, wherein the calibration assembly (3) comprises a spacer (323), the spacer (323) being disposed between the clamp (32) and the battery (4).

7. The distance measurement apparatus according to any one of claims 2 to 6, wherein the clamp (32) comprises two clamping members (321) and connection members (322) connected between the two clamping members (321).

8. The distance measurement apparatus according to claim 7, wherein the distance between the two clamping members (321) is adjustable.

9. The distance measurement apparatus according to claim 7 or 8, wherein the clamp (32) further comprises a blocking member (324), the blocking member (324) being disposed between the two clamping members (321), the blocking member (324) being mounted on the connection members (322) and the blocking member (324) being movable along the connection members (322) to adjust the distance between the blocking member (324) and the clamping members (321).

10. A battery assembly equipment, comprising the distance measurement apparatus according to any one of claims 1 to 9.

11. A distance measurement method, comprising:
correcting an image capture parameter of an image capture device (1);
capturing, using the image capture device (1), an image of a gap occurring during assembly of a battery (4); and
processing the image to obtain a width dimension of the gap along a first direction;
wherein a difference between a measured value of the gap and an actual value of the gap is less than a preset value, wherein the measured value of the gap is the width dimension of the gap along the first direction obtained after an image captured by the corrected image capture device (1) is processed.

12. The distance measurement method according to claim 11, wherein the operation of correcting the image capture parameter of the image capture device (1) comprises:
inserting a calibration piece (31) into the gap;
clamping the battery (4) to prevent the calibration piece (31) from falling out of the gap; and
capturing, using the image capture device (1), an image of the gap provided with the calibration piece (31), and adjusting the image capture parameter of the image capture device (1) to cause a difference between the measured value of the gap and a thickness dimension of the calibration piece (31) along the first direction to be less than the preset value, wherein the measured value of the gap is the width dimension of the gap along the first direction obtained after the image of the gap provided with the calibration piece (31) captured by the image capture device (1) is processed.

13. The distance measurement method according to claim 11 or 12, wherein the operation of correcting the image capture parameter of the image capture device (1) comprises:
inserting two calibration pieces (31) of identical thickness into the gap, the two calibration pieces (31) being spaced apart by a preset distance along a second direction perpendicular to the first direction;
clamping the battery (4) to prevent the calibration piece (31) from falling out of the gap; and
capturing, using the image capture device (1), an image of the gap located between the two calibration pieces (31), and adjusting the image capture parameter of the image capture device (1) to cause a difference between the measured value of the gap and a thickness dimension of the calibration piece (31) along the first direction to be less than the preset value, wherein the measured value of the gap is the width dimension of the gap along the first direction obtained after the image of the gap provided with the calibration piece (31) captured by the image capture device (1) is processed.

14. The distance measurement method according to claim 12 or 13, wherein the operation of correcting the image capture parameter of the image capture device (1) further comprises: performing replacement with a plurality of calibration pieces (31) having different thicknesses, and performing a plurality of corrections on the image capture parameter of the image capture device (1).

15. The distance measurement method according to any one of claims 11 to 14, wherein the image capture parameter of the image capture device (1) comprises at least one of exposure, sensitivity, or focal length.

16. A battery assembly method, comprising the distance measurement method according to any one of claims 11 to 15.
